# EUROPEAN PATENT SPECIFICATION

(11) **EP 4 223 635 B1**
(45) Date of publication and mention of the grant of the patent: **12.08.2026**
(21) Application number: 23153373.8
(22) Date of filing: 26.01.2023
(51) Int. Cl.: B64C 27/32, B64C 27/33, B64C 27/10, B64C 27/48

(54) **COMPACT PROPELLER BLADE RETENTION ASSEMBLY**
KOMPAKTE PROPELLERBLATTHALTEVORRICHTUNG
ENSEMBLE COMPACT DE RETENUE DE PALE D'HÉLICE

(30) Priority: 04.02.2022 US 202217665432
(43) Date of publication of application: 09.08.2023
(73) Proprietor: Lockheed Martin Corporation, Bethesda, Maryland 20817 (US)
(72) Inventor: Tobin, Evan S., Trumbull, 06484 (US); Schuster, Daniel George, Bethlehem, 06751 (US); Schmaling, David N., Southbury, 06488 (US); Medrano, Evan, Stratford, 06615 (US); Siddique, Masruk, Stratford, 06615 (US); Byrne, Erik M., Amherst, 01002 (US); Orbon, James, New Haven, 06511 (US)
(74) Representative: Schmitt-Nilson Schraud Waibel Wohlfrom Patentanwälte Partnerschaft mbB

(56) References cited:
- WO-A2-2017/078817
- US-A1- 2010 124 501
- US-A1- 2021 316 849

## Description

This invention was made with Government support under Agreement No. W911W6-19-9-0005, awarded by the Army Contracting Command-Redstone Arsenal. The Government has certain rights in the invention.

The present application relates generally to rotor blade retention assemblies for a rotary propulsor system.

Rotary propulsor systems include rear-facing rotor blades disposed at the tail of an airframe. Such systems generally assist with the generation of forward thrust, although rotary propulsor systems may also generate lift and provide for additional yaw control. The rotor blades may be formed from composite material and have a strap.

WO 2017/078817 A2 describes a rotor head for use with a blade, comprising: an outboard arm including an inboard surface; an axial retention block secured at an interior of a blade casing disposable about the outboard arm; a box frame body having an outboard surface, which is disposable to abut with the inboard surface, and lead/lag sides and which is formed to define a first cavity, an aperture communicative with the first cavity through the outboard surface and second and third cavities extending outwardly in opposite lead/lag directions from the first cavity to the lead/lag sides; a tension torsion (TT) strap, which is receivable in the first cavity to extend through the aperture and connect at an outboard end thereof with the axial retention block, and a pin, which is receivable in the second and third cavities and extendable through an inboard end of the TT strap so that the TT strap transfers axial loads of the blade from the axial retention block to the box frame.

US 2010/124501 A1 describes an apparatus comprising: a housing having a first end, a second end, a first side, a second side, an opening located in the first end, and a passage extending from the opening; a first member extending from the first side, wherein the first member has a first channel in communication with the passage and the channel has a first center axis; a second member extending from the first side, wherein the second member has a second channel in communication with the passage and the second channel has a second center axis substantially aligned with the center axis of the channel in the first member.

The present invention is specified in the claims.

In an exemplary aspect, a rotor blade retention assembly in a system as claimed is provided. The rotor blade retention assembly is configured to connect a rotor blade to a central hub comprising a hub arm coupled to and extending radially outward from a hub bowl, the hub arm including a hub arm lug. The rotor blade retention assembly includes a tension-torsion strap. The tension-torsion strap includes an inboard end and an outboard end, the inboard end including an inboard pin hole and the outboard end including an outboard pin hole. The rotor blade retention assembly further includes an inboard blade pin and an outboard blade pin. The inboard blade pin is configured to extend through the hub arm lug and the inboard pin hole and to couple the inboard end of the tension-torsion strap to the hub arm. The outboard blade pin is configured to extend through a blade lug of the rotor blade and the outboard pin hole and to couple the outboard end of the tension-torsion strap to the rotor blade.

The system includes a plurality of hub arms coupled to and extending radially outward from a hub center, at least one hub arm of the plurality of hub arms including a hub arm lug; a plurality of rotor blades; and a tension-torsion assembly configured to couple one of the rotor blades to the at least one hub arm. The tension-torsion assembly includes a tension-torsion strap comprising an inboard end and an outboard end. The system further includes a pitch bearing assembly arranged around the hub arm and disposed within the blade inner cavity. The pitch bearing assembly includes a first pitch bearing; and a second pitch bearing.

In yet a further aspect, a method for installing a tension-torsion assembly of a rotor blade retention assembly is provided.

These and further exemplary aspects are described in further detail below.

The disclosure will become more fully understood from the following detailed description, taken in conjunction with the accompanying Figures, wherein like reference numerals refer to like elements unless otherwise indicated, in which:
Figure 1 is perspective view of a rotary wing aircraft.
Figure 2 is perspective view of a central hub of a rotor blade retention assembly without a plurality of rotor blades, according to an example embodiment.
Figure 3 is a perspective view of a rotor blade retention assembly.
Figure 4 is perspective view of a rotor blade retention assembly with a tension-torsion assembly shown in an exploded view, according to an example embodiment.
Figure 5 is a cross-sectional view of a rotor blade retention assembly, according to an example embodiment.
Figure 6 is a cross-sectional view of Detail A shown in Figure 5, according to an example embodiment.
Figure 7 is an exploded perspective view of a pitch bearing assembly, according to an example embodiment.
Figure 8 is a cross-sectional view of Detail B shown in Figure 5, according to an example embodiment.
Figure 9 is a flowchart illustrating a process for installing an assembly, according to an example embodiment.
Figure 10 is a flowchart illustrating a process for installing a tension-torsion assembly of a rotor blade retention assembly, according to an example embodiment.
Figure 11 is a flowchart illustrating a process for installing a retainer assembly of the rotor blade retention assembly according to an example embodiment.

It will be recognized that the Figures are the schematic representations for purposes of illustration. The Figures are provided for the purpose of illustrating one or more implementations with the explicit understanding that the Figures will not be used to limit the scope of the meaning of the claims.

Following below are more detailed descriptions of various concepts related to, and implementations of, methods and apparatuses for providing a rotor blade retention assembly for a rotary propulsor system. The various concepts introduced above and discussed in greater detail below may be implemented in any of a number of ways, as the described concepts are not limited to any particular manner of implementation. Examples of specific implementations and applications are provided primarily for illustrative purposes.

### I. Overview

Referring to the figures generally, various embodiments disclosed herein relate to a rotor blade retention assembly for a rotary propulsor system. As explained in more detail herein, the retention assembly according to certain exemplary non-limiting embodiments provides easier blade removal, high blade bending load capability, and a compact arrangement for handling centrifugal force and bending moments to allow for a compact blade root design. Other configurations of rotor blade retention assemblies are less compact and require additional disassembly steps to remove the blade.

Implementations described herein are related to a rotor blade retention assembly with a central hub including a hub arm with a hub arm lug, a rotor blade including a blade lug, a tension-torsion strap comprising an inboard end and an outboard end each comprising a pin hole, an inboard blade pin extending through and coupling together the hub arm lug and the inboard end of the tension-torsion strap, and an outboard blade pin extending through and coupling together the blade lug and the outboard end of the tension-torsion strap. The tension-torsion strap thus couples the rotor blade to the hub arm and resists the centrifugal force when the propulsor is rotating. As used herein, "inboard" refers to a direction towards the central hub and "outboard" refers to a direction away from the central hub and towards the outer end of the rotor blade.

In typical configurations, the inboard end of the tension torsion rod is coupled to a centrifugal retention hoop within a hub bowl (a hub center, a portion of a hub having a shallow or depressed configuration) of the central hub. This arrangement generally necessitates a larger hub bowl and longer hub arms, requiring the blade retention hardware to be placed radially further from the hub. Furthermore, such configurations generally require that components such as the hub top plate, slider bushing, and top-plate-to-pitch-change-shaft seals to be removed in order to remove the blade from the hub.

In certain exemplary implementations described herein, a blade is coupled to the hub via a lug in the hub arm and is not coupled directly to a centrifugal retention hoop in the hub bowl. In such exemplary implementations, the rotor blade can be removed from the hub while the hub top plate, slider bushing and seals remain in place. Further, the radius of the hub can be reduced, thus reducing the weight of the hub, and the blade retention hardware can be moved closer to the hub. This also allows a more aerodynamic airfoil region to begin further inboard, which provides lower thickness-to-chord (T/C) ratios for enhanced aerodynamic performance.

### II. Overview of Example Rotor Blade Retention Assembly

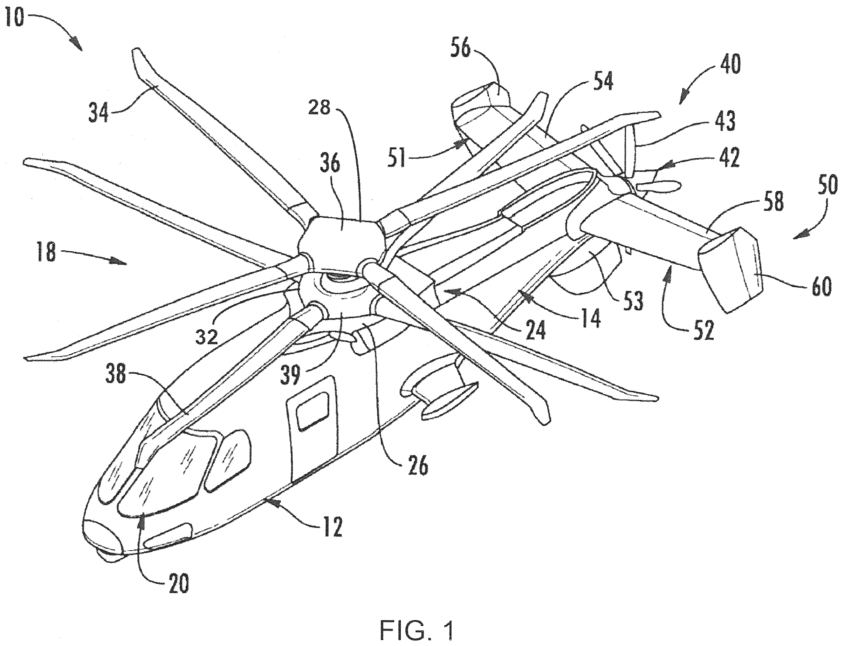

Figure 1 is perspective view of a rotary wing aircraft in accordance with an example embodiment. More particularly, Figure 1 depicts an exemplary aircraft as shown and described in U.S. Patent Pub. No. 2020/0385107 A1, which is incorporated by reference herein in its entirety for the overall aircraft system shown therein and construction thereof. Figure 1 depicts an exemplary embodiment of a rotary wing, vertical takeoff and landing (VTOL) aircraft 10. Aircraft 10 includes an airframe or fuselage 12 having a plurality of surfaces with an extending tail 14. A coaxial main rotor assembly 18 is located at the fuselage 12 and rotates about a main rotor axis, A. In an exemplary embodiment, the fuselage 12 includes a cockpit 20 having seats for flight crew (e.g., pilot and co-pilot) and passengers. Main rotor assembly 18 is driven by a power source, for example, one or more engines 24, via a gearbox 26. Main rotor assembly 18 includes an upper rotor assembly 28 that may be driven in a first direction (e.g., counter-clockwise) about the main rotor axis, A, and a lower rotor assembly 32 that may be driven in a second direction (e.g., clockwise) about the main rotor axis, A, opposite to the first direction (i.e., counter rotating rotors). Upper rotor assembly 28 includes a first plurality of rotor blades 34 supported by a first or upper rotor hub. Lower rotor assembly 32 includes a second plurality of rotor blades 38 supported by a second or lower rotor hub 39. In some embodiments, aircraft 10 may include a translational thrust system 40 having a propeller 42 or a propulsor located at extending tail 14 to provide translational thrust (forward or rearward) for aircraft 10. Propeller 42 includes a plurality of blades 43. Although a particular aircraft configuration is illustrated in this non-limiting embodiment, other configurations may be employed (e.g. although the dual rotor system is depicted as coaxial, embodiments include dual rotor aircraft having non-coaxial rotors). Propeller 42 or translational thrust system 40 is connected to and driven by the engine 24 via the gearbox 26. In accordance with another aspect of an exemplary embodiment, extended tail 14 includes a tail section 50 including starboard and port horizontal stabilizers 51 and 52. Tail section 50 also includes a vertical stabilizer 53 that extends downward from extending tail 14. Starboard horizontal stabilizer 51 includes a starboard active elevator 54 and a starboard active rudder 56. Similarly, port horizontal stabilizer 52 includes a port active elevator 58 and a port active rudder 60. Elevators 54 and 58 and rudders 56 and 60 act as controllable surfaces, e.g., surfaces that alter a flight path/characteristics of aircraft 10.

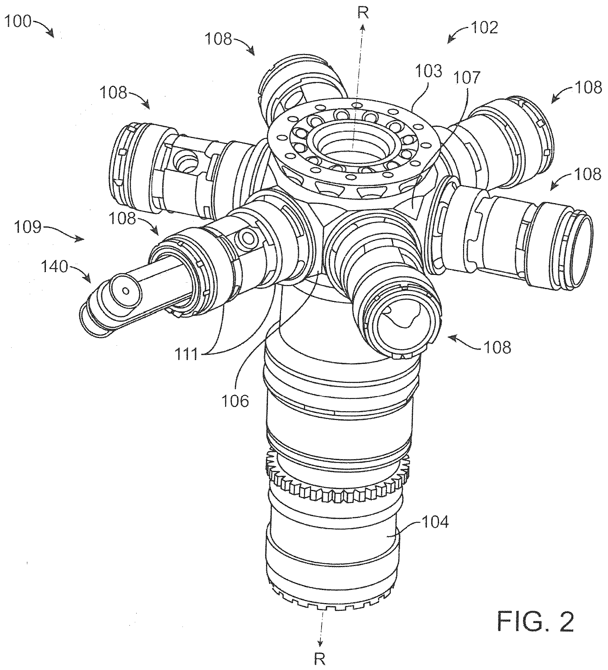

Figures 2 and 4-8 depict an example propulsor assembly 100 (e.g., rotary retention system, propulsion retention system, etc.) or portions thereof. Figure 2 depicts a perspective view of the propulsor assembly 100. The rotor blade retention assembly 109 includes a hub system 102 (e.g. hub body, rotor hub, etc.) coupled (e.g., mounted, attached, fixed, welded, fastened, riveted, bonded, pinned, etc.) to the rotary wing aircraft (e.g., an airframe, an aircraft, a rotorcraft, etc.), as seen in Figure 1. These figures will be described in greater detail below.

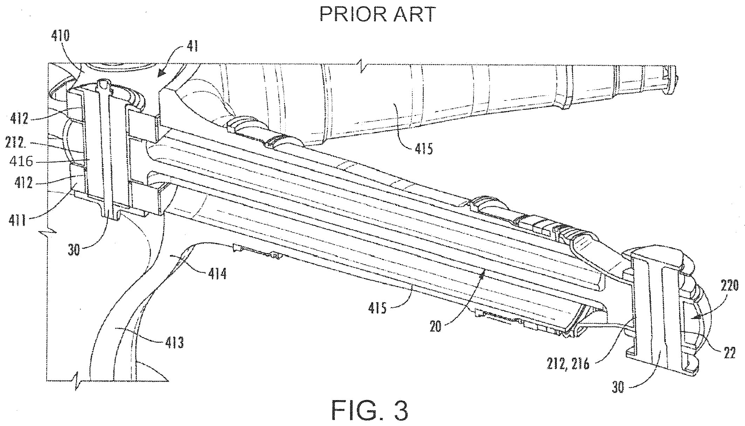

As shown in Figure 2, the hub system 102 includes a rotor shaft 104 and a central hub 106 coupled to a rotor shaft 104. The rotor shaft 104 extends upwardly along and around a rotor axis R and is rotated about the rotor axis R relative to another structure to rotate the central hub 106 about the rotor axis R. The central hub 106 may include a hub bowl 107 and one or more hub arms 108 coupled thereto and extending radially outward from the central hub 106 and orthogonal to the rotor axis R. The hub bowl 107 may be substantially hollow and may contain additional components therein. The hub bowl 107 may be covered by a hub top plate 103. The propulsor assembly includes a plurality of rotor blade retention assemblies 109, each coupled to a hub arm 108. In Figure 3, one complete rotor blade retention assembly 109 is shown, but it should be understood that each hub arm 108 may have a rotor blade retention assembly 109 coupled thereto. Each rotor blade retention assembly 109 includes a tension-torsion assembly 141 and a pitch bearing assembly 200.

Figure 3 depicts a conventional rotor blade retention assembly. The hub system 414 includes a hub bowl 41, and a plurality of hub arms 415, and a rotor mast 413. A tension-torsion strap 20 extends through a hub arm 415 and is coupled to two hoop plates 410, 411 within the hub bowl 41 by an inboard pin 416. The inboard pin 416 is inserted through a hole 412 in each hoop plate 410, 411 and through a hole 212 in the tension-torsion strap 20. A fastener 30 holds the inboard pin 416 in place. The tension-torsion strap 20 extends through the hub arm 415 to the outboard end 220 of the hub arm 415. A rotor blade (not shown) may be slid over the hub arm 415 and coupled to the tension-torsion strap 134 via outboard pin 216. The outboard pin 216 may extend through holes in the rotor blade and a hole 22 in the tension-torsion strap 134, thus coupling the rotor blade to the hub system 414. The outboard pin 216 may be secured in place with fastener 30. This design requires full removal of the hub top plate (e.g., hub top plate 103), seals, and other additional hardware in order to access the inboard pin 416 to remove the tension-torsion strap 20. In such a system, the blade retention hardware (e.g., the outboard pin 216 is located farther outboard. Where the rotor blades surround the hub arms 415, the rotor blades must be shaped into larger, less aerodynamic airfoils that may be generally cylindrical.

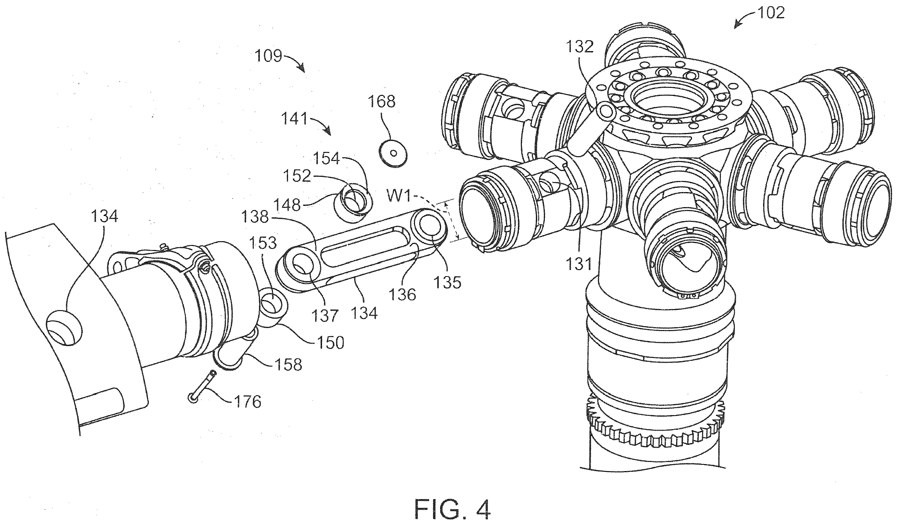

Figure 4 depicts a perspective view of a rotor blade retention assembly 109, a rotor blade 110 and a hub system 102, according to an example embodiment. The tension-torsion assembly 141 of the rotor blade retention assembly 109 is shown as an exploded view. The tension-torsion assembly 141 includes a tension-torsion strap 134, an outboard blade pin 158 configured to couple the outboard end 138 of the tension-torsion strap 134 to the rotor blade lug 114 of the rotor blade 110, and an inboard blade pin 132 configured to couple the inboard end 136 of the tension-torsion strap 134 to the hub arm lug 131 of hub arm 108. The tension-torsion strap thus couples the rotor blade 110 to the hub arm 108. During operation of the rotary wing aircraft, the hub system 102 spins the rotor blades, causing the blades to experience centrifugal force. The tension-torsion straps 134 resist the centrifugal force, keeping the rotor blades in place and attached to the hub arms 108.

Attaching the tension-torsion strap 134 to the hub arm 108 rather than to the hub bowl 107 allows for a shorter tension-torsion strap 134 and allows removal of the inboard blade pin 132, the tension-torsion strap 134, and the rotor blade 110 without needing to remove hub top plate 103, hub seals, or other components of the central hub 106. Further, the hub bowl 107 radius and hub arm 108 radius may be reduced because the central hub does not have to include hoop plates 410, 411 as seen in the prior art. This reduces the overall weight of the hub system 102. The reduced hub arm radius also allows the more aerodynamic blade airfoil portion to begin farther inboard than in previous designs. The portions of the rotor blade that surround the hub arm are roughly cylindrical with higher T/C ratios than the more aerodynamic portions farther outboard. With a shorter hub arm 108, the more aerodynamic portions of the rotor blade 110 can begin closer to the hub bowl 107.

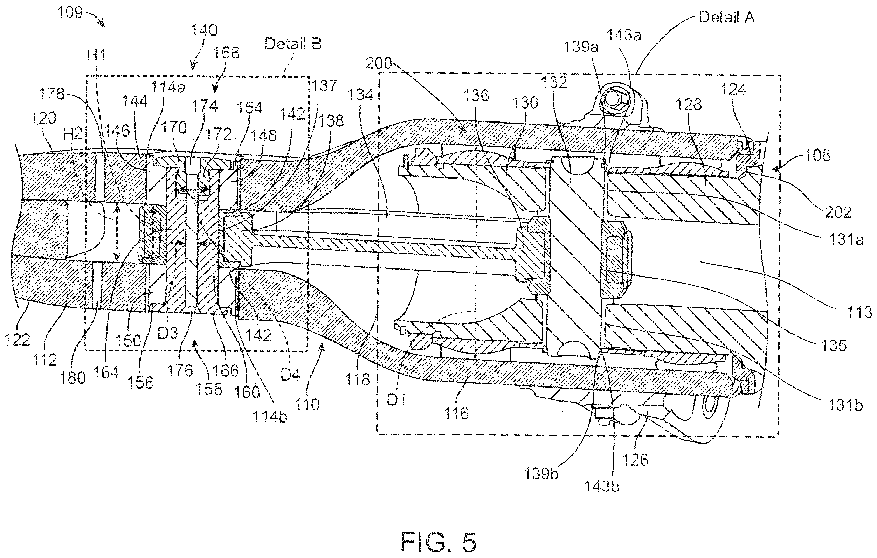

The outboard blade pin 158 is inserted through an upper bushing 148 and a lower bushing 150 and retained in place by fastener 176, which is fastened to fastener nut 168. The tension-torsion strap 134 includes an outboard pin hole 137 configured to receive the outboard blade pin 158 and an inboard pin hole 135 configured to receive the inboard blade pin 132. The tension-torsion strap 134 may be a single component or may include multiple parts. For example, the tension-torsion strap 134 may include bushings or other components lining the pin holes 149, 151. The tension-torsion strap 134 may have a width W1 and, at the outboard end, may have a height H1 (shown in Figure 5). The arrangement of the tension-torsion assembly 141 in use is shown in detail in Figure 5.

Figure 5 depicts a cross-sectional view of the rotor blade retention assembly 109 coupled to the hub arm 108 and the rotor blade 110, according to an example embodiment. The rotor blade 110 may include a blade body 112, a blade lug 114 in the blade body 112, a blade shaft 116 at an inboard end of the blade body 112, and a blade inner cavity 118 that extends radially outward along an interior of the blade shaft 116 and the blade body 112, as seen in Figure 5, for example. The blade shaft 116 is configured to directly attach (e.g. couple, mount, etc.) to and extend radially outwardly from the hub arm 108. The blade body 112 directly attaches to and extends radially outwardly from the blade shaft 116. Optionally, the blade shaft 116 and the blade body 112 may be two separate components that are attachable (e.g., removable, reattachable, etc.) to each other. Alternatively, the blade shaft 116 and the blade body 112 may be constructed as a single unitary piece or component that cannot be separated without destruction.

At the blade shaft 116, the blade inner cavity 118 may have a circular cross section with a diameter of a distance D1. As the blade inner cavity 118 extends radially outboard along the along the interior of the rotor blade 110, the cross section narrows in at least the vertical direction (as depicted) such that the height of the blade inner cavity reduces to a height H2 from distance D1. The rotor blade 110 may be further defined by an upper outer surface 120 and a lower outer surface 122 separated by the blade inner cavity 118. Each rotor blade 110 also includes a pitch horn 126 mounted to the central hub 106 that attaches (e.g., via an indirect attachment) the blade shaft 116 to the central hub 106.

Referring still to Figure 5, in some embodiments of the rotor blade retention assembly 109, the hub arm 108 of the central hub 106 extends at least partially into the blade inner cavity 118 of the blade shaft 116. The hub arm 108 may extend into the blade inner cavity 118 where the diameter of the blade inner cavity 118 is at a distance D1. The rotor blade retention assembly 109 includes a tension-torsion strap 134. The tension-torsion strap 134 may include an inboard end 136 having an inboard pin hole 135 and an outboard end 138 having an outboard pin hole 137. The inboard end 136 may extend into a hub arm cavity 113 of the hub arm 108 and the outboard end 138 may extend into the blade inner cavity 118.

The tension-torsion strap 134 cooperates with the inboard blade pin 132 and the outboard blade pin 158 to transfer a centrifugal force from the rotor blade 110 to the central hub 106. The inboard blade pin 132 may be configured to extend through the upper portion 131a and the lower portion 131b of the hub arm lug 131 and the inboard pin hole 135 to couple the inboard end 136 of the tension-torsion strap 134 to the hub arm 108. The inboard pin hole 135 and the hub arm lug 131 are configured to receive the inboard blade pin 132 such that the tension-torsion strap 134 is held in double shear by the upper portion 131a and the lower portion 131b of the hub arm lug 131 when it is subjected to centrifugal force. That is, the tension-torsion strap 134 is in a shear state where shear occurs in two planes (e.g., planes associated with each of the upper portion 131a and lower portion 131b). The tension-torsion strap 134 extends radially outward from the central hub 106 in the blade inner cavity 118 such that the outboard pin hole 137 extends into a region of the blade inner cavity 118 in which the height of the cavity 118 is a height H2. The outboard blade pin 158 is configured to extend through the upper portion 114a and the lower portion 114b of the blade lug 114 and the outboard pin hole 137 to couple the outboard end 138 of the tension-torsion strap 134 to the rotor blade 110. The outboard pin hole 137 and the blade lug 114 are configured to receive the outboard blade pin 158 such that the tension-torsion strap 134 is held in double shear by the upper portion 114a and the lower portion 114b of the blade lug 114 when it is subjected to centrifugal force.

The rotor blade retention assembly 109 may include a pitch bearing assembly 200 that includes a first pitch bearing 127 and a second pitch bearing 129. The first pitch bearing 127 is arranged around and coupled to an inboard portion 128 of the hub arm 108 coupled to the hub bowl 107. The second pitch bearing 129 is arranged around and coupled to an outboard portion 130 of the hub arm 108. The blade shaft 116 is configured to surround the pitch bearings 127, 129 such that the pitch bearings are in contact with the blade shaft all around their outer diameters. For example, the outer diameter of the pitch bearings may be substantially equal to diameter D1.

The pitch bearings may allow the rotor blade 110 to rotate relative to the hub arm 108 about a longitudinal axis of the hub arm 108. Radial force may be applied to the pitch horn 126 to rotate the rotor blade 110 to adjust the pitch angle, which changes the amount of thrust from the propulsor. For example, by increasing the pitch angle, the rotor blade 110 provides more thrust. Conversely, by decreasing the pitch angle, the rotor blade 110 provides less thrust. When the rotor blade 110 is rotated relative to the hub arm 108, the outboard blade pin 158 causes the outboard end 138 of the tension-torsion strap 134 to rotate relative to the inboard end 136. The tension-torsion strap 134 can torsionally deflect and act as a torsion spring to resist the rotation of the rotor blade 110. During operation of a rotary wing aircraft, the rotor blades 110 may experience high bending moments which are imparted to the pitch bearings 127, 129. The pitch bearings 127, 129 form a force couple that may resist these bending moments while allowing the rotor blades 110 to rotate in order to adjust the pitch.

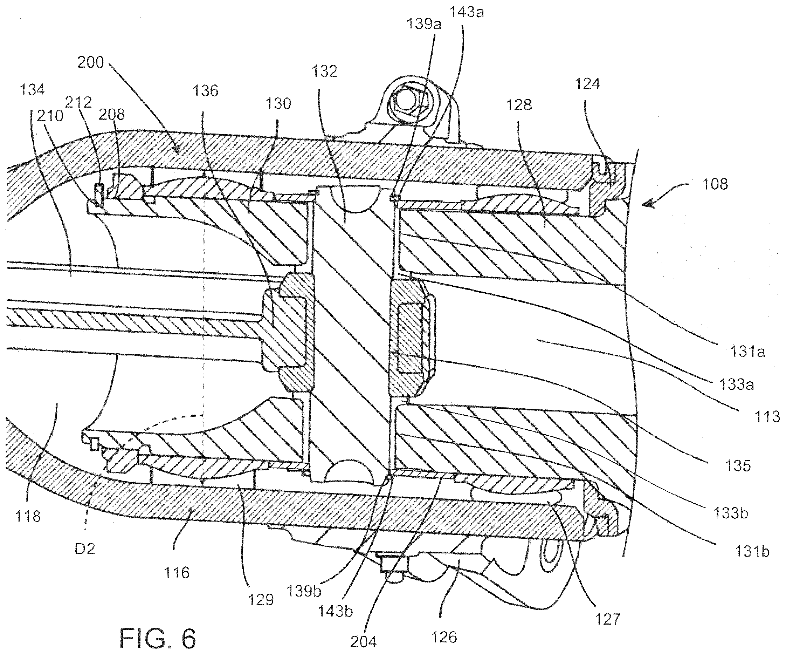

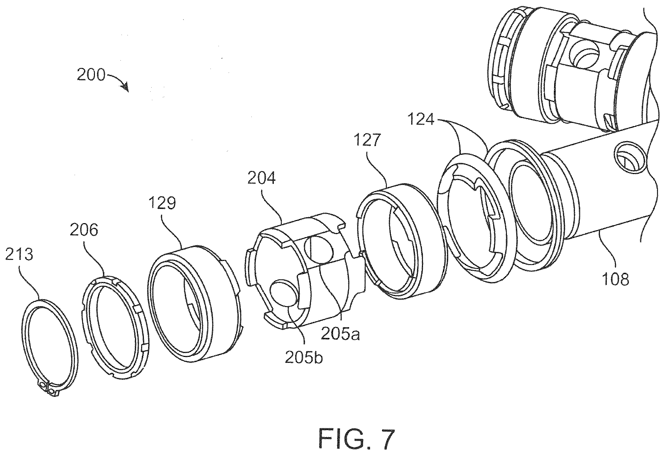

Referring to Figure 6, a cross-sectional view of a portion of the rotor blade retention assembly 109 is shown, as seen in Detail A, including the pitch bearing assembly 200. Figure 7 shows an exploded perspective view of the pitch bearing assembly 200. The rotor blade retention assembly 109 serves as a retainer system together with the tension-torsion assembly described herein, in accordance with various exemplary embodiments. The hub arm 108 includes an inboard edge 202 to prevent the pitch bearing assembly 200 from moving farther inboard. The pitch bearing assembly 200 may include a blade seal 124 (e.g., seal, band, etc.), that surrounds the hub arm and is pressed against the inboard edge 202 of the hub arm. The blade seal 124 is disposed between the blade shaft 116 and the central hub 106 such as to create a seal between the blade inner cavity 118 and the environment. Moving outboard, the first pitch bearing 127 may be pressed against the blade seal 124 or may otherwise be disposed proximate the blade seal 124. Next, the pitch bearing assembly 200 may include a spacer 204 that surrounds the hub arm 108 and is pressed against or otherwise disposed proximate the first pitch bearing 127. The second pitch bearing 129 may be pressed against or disposed proximate the opposite side of the spacer 204.

Next, the pitch bearing assembly 200 may include a fastener 206 attached to the outboard portion 130 of the hub arm 108. For example, the hub arm 108 may include a threaded portion 208 and fastener 206 may be a spanner nut configured to be threaded onto the threaded portion 208. The fastener 206 may retain the other components of the pitch bearing assembly and may press against the side of the second pitch bearing 129. The fastener 206 may impart compressive force on the pitch bearings 127, 129, the spacer 204, and the blade seal 124 such that those components may be substantially unable to move along a longitudinal axis of the hub arm 108 when the hub system 102 is spinning. Finally, the pitch bearing assembly 200 may include a retaining ring 213 disposed in a groove 210 of the hub arm 108. The retaining ring may be, for example, a fastener such as a clip (e.g. a c-clip) and may be configured to retain the other components of the pitch bearing assembly 200 from moving in the outboard direction due to centrifugal force. For example, the retaining ring 213 may prevent the fastener 206 from fully disengaging (e.g., unthreading) from the threaded portion 208.

Referring again to Figure 6, the arrangement of the inboard blade pin disposed in the hub arm lug 131 is also shown. The upper portion 131a of the hub arm lug 131 may have a first bushing 133a and the lower portion 131b of the hub arm lug 131 may have a second bushing 133b. The bushings 133 may provide a tighter fit of the inboard blade pin 132 in the hub arm lug 131. The bushings may also provide a tighter fit of the tension-torsion strap 134 in the hub arm cavity 113 and may substantially prevent the tension-torsion strap 134 from moving along a longitudinal axis of the inboard blade pin 132. A first end of inboard blade pin 132 may have a first groove 139a around its circumference configured to receive a first pin retaining ring 143a. A second, opposite end of the inboard blade pin 132 may have a second groove 139b around its circumference configured to receive a second pin retaining ring 143b. The pin retaining rings 143 may be, for an example, c-clips that fit into the grooves 139. The pin retaining rings 143 may substantially prevent the inboard blade pin 132 from moving within the hub arm lug 131 along a longitudinal axis of the inboard blade pin 132, thus keeping the inboard blade pin 132 in place.

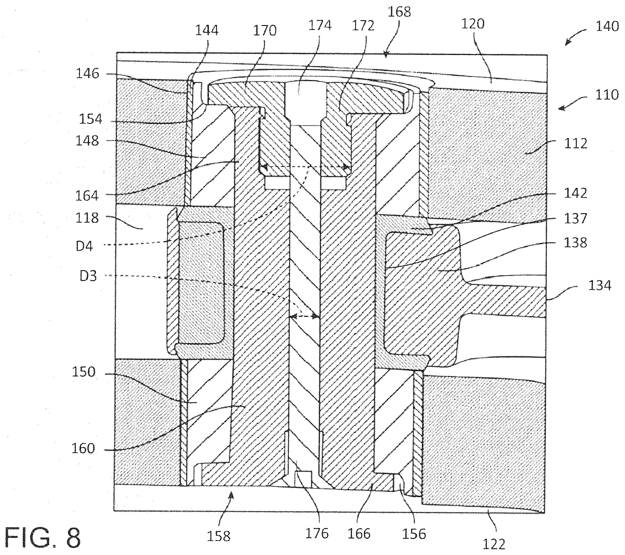

Referring to Figure 8, in some embodiments, the rotor blade retention assembly 109 includes an outboard blade pin retainer assembly 140, as seen in Detail B. The outboard blade pin retainer assembly 140 is disposed within the blade lug 114 and has a cylindrical shape. The outboard pin hole 137 extends into the blade lug 114 and is configured to receive the outboard blade pin retainer assembly 140. The outboard pin hole 137 of the tension-torsion strap 134 surrounds a portion of the outboard blade pin retainer assembly 140 such as to define an inner mating component surface 142. The inner mating component surface 142 cooperates with the outboard blade pin retainer assembly 140 to reduce or eliminate a gap between the outboard blade pin retainer assembly 140 and the inner mating component surface 142, which is further described below.

Referring to Figures 6 and 8, in some embodiments, the outboard blade pin retainer assembly 140 includes a protective layer 144 (e.g. bushing, liner, etc.). The protective layer 144 defines an exterior layer of the outboard blade pin retainer assembly 140 such as to line an inner wall 146 of the blade lug 114. A first portion of the protective layer 144 extends from the outboard pin hole 137 to the upper outer surface 120 while a second portion of the protective layer 144 extends from the outboard pin hole 137 to the lower outer surface 122. The protective layer 144 is made of a durable material (e.g. fiberglass, etc.) and protects the blade lug 114. The outboard blade pin retainer assembly 140 includes an upper bushing 148. The upper bushing 148 is radially inward from the protective layer 144 such that the first portion of the protective layer 144 is disposed between the inner wall 146 and the upper bushing 148. The upper bushing 148 is slidably disposed within the blade lug 114. The upper bushing 148 extends from the inner mating component surface 142 to the upper outer surface 120 of the rotor blade 110.

Further, in accordance with some embodiments, the outboard blade pin retainer assembly 140 also includes a lower bushing 150. The lower bushing 150 is radially inward from the protective layer 144 such that the second portion of the protective layer 144 is disposed between the inner wall 146 and the lower bushing 150. The lower bushing 150 is slidably disposed within the blade lug 114. The lower bushing 150 extends from the inner mating component surface 142 to the lower outer surface 122 of the rotor blade 110. The arrangement of the upper bushing 148 and the lower bushing 150 being slidably disposed within the blade lug 114 allows for enhanced clamping performance. In particular, the upper bushing 148 and the lower bushing 150 are able to clamp the inner mating component surface 142 to allow for a larger range of component tolerances. Additionally, the sliding action of the upper bushing 148 and the lower bushing 150 allows repeatable clamping of the inner mating component surface 142 without overstressing the outboard blade pin retainer assembly 140 and the rotor blade 110.

In some embodiments, the upper bushing 148 includes an upper bushing inner cavity 152 and the lower bushing 150 includes a lower bushing inner cavity 153, as shown in Figure 4. The upper bushing 148 includes an upper counterbored portion 154. Unlike in other retainer assemblies, the upper counterbored portion 154 is in the upper bushing 148 rather than the blade body 112. Because the upper counterbored portion 154 is in the upper bushing 148, the blade body 112 does not experience high shear stresses at the blade lug 114. Similarly, the lower bushing 150 may include a lower counterbored portion 156.

In some embodiments, the outboard blade pin retainer assembly 140 includes an outboard blade pin 158. The outboard blade pin 158 is radially inward from the upper bushing 148 and the lower bushing 150 and is disposed within the upper and lower bushing inner cavities 152, 153. The outboard blade pin 158 includes a blade pin body portion 160. The outboard blade pin 158 is disposed within the outboard pin hole 137 of the tension-torsion strap 134 such that the outboard pin hole 137 surrounds the blade pin body portion 160. The outboard blade pin 158 includes a blade pin inner cavity 162 extending longitudinally therethrough. The blade pin inner cavity 162 extends along the entire length of the outboard blade pin 158. In some embodiments, the portion of the blade pin inner cavity 162 that extends through the blade pin body portion 160 and has a diameter with a distance D3. The outboard blade pin 158 also includes a top portion 164. The top portion 164 is radially inward from the upper bushing 148. The portion of the blade pin inner cavity 162 that extends through the top portion 164 has a diameter with a distance D4, which is greater than the distance D3. In some embodiments, the outboard blade pin 158 includes a base portion 166. The base portion 166 is at an end opposite of the top portion 164 and extends into the lower counterbored portion 156 of the lower bushing 150 such that the base portion 166 is below a portion of the lower bushing 150.

In some embodiments, the outboard blade pin retainer assembly 140 includes a fastener nut 168. The fastener nut 168 cooperates with the upper bushing 148 to clamp the inner mating component surface 142 and reduce the gap at the inner mating component surface 142. The fastener nut 168 includes a cap portion 170. The cap portion 170 is disposed within the upper counterbored portion 154 such that the fastener nut 168 remains below the upper outer surface 120 of the rotor blade 110. Owing to the arrangement of the cap portion 170 disposed within the upper counterbored portion 154, the cap portion 170 is positioned above a portion of the upper bushing 148 and the outboard blade pin 158. The fastener nut 168 also includes a lower portion 172. The lower portion 172 extends below the cap portion 170 such that the lower portion 172 is disposed within the blade pin inner cavity 162. Specifically, the lower portion 172 is disposed within the portion of the blade pin inner cavity 162 that extends through the top portion 164 of the outboard blade pin 158, but is not disposed within the portion of the blade pin inner cavity 162 that extends through the blade pin body portion 160. Because the lower portion 172 of the fastener nut 168 is disposed within the blade pin inner cavity 162, the top portion 164 of the outboard blade pin 158 is disposed between the lower portion 172 and the upper bushing 148. The fastener nut 168 further includes a fastener cavity 174. The fastener cavity 174 extends down through the cap portion 170 and the lower portion 172 such that the fastener cavity 174 and the blade pin inner cavity 162 are aligned with one another.

In some embodiments, the outboard blade pin retainer assembly 140 includes a fastener 176 (e.g., bolt, tension fastener, etc.). The fastener 176 is a threaded fastener disposed within the blade pin inner cavity 162 and extends from the lower outer surface 122 of the rotor blade 110 up into the fastener cavity 174 such that the fastener 176 remains fixed in the lower portion 172 of the fastener nut 168. As described above, the cap portion 170 is disposed above a portion of the upper bushing 148 and the outboard blade pin 158. Consequently, as the fastener 176 is inserted into the blade pin inner cavity 162 and up into the fastener cavity 174, the fastener 176 engages with the fastener nut 168 such that the cap portion 170 compresses the upper bushing 148. Therefore, the upper bushing 148 clamps the inner mating component surface 142 and reduces the gap between the upper bushing 148 and the inner mating component surface 142. The reduction of the gap in this way avoids the need for shims with peelable layers, which may otherwise be needed to maintain tolerance dimensions at the inner mating component surface 142.

In some embodiments, the rotor blade 110 further includes an upper blade drain hole 178 and a lower blade drain hole 180 as shown, for example, in Figure 5. The upper blade drain hole 178 and the lower blade drain hole 180 are located radially outward from the outboard blade pin retainer assembly 140. The upper blade drain hole 178 extends from the blade inner cavity 118 to the upper outer surface 120. The lower blade drain hole 180 extends from the blade inner cavity 118 to the lower outer surface 122. Both the upper blade drain hole 178 and the lower blade drain hole 180 are configured to facilitate the removal of a liquid (e.g., water, condensation, etc.) from the blade inner cavity 118.

### III. Example Method of Installing the Pitch Bearing Assembly.

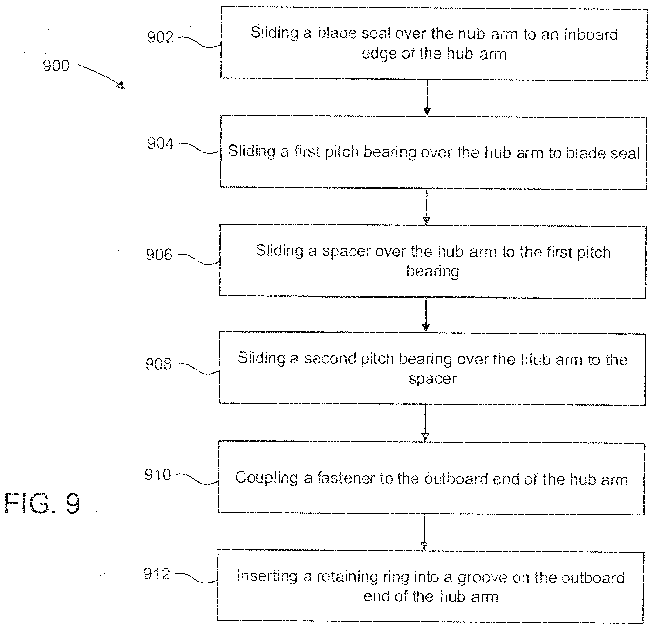

Figure 9 illustrates an installation process 900 (e.g., method, etc.) for installing a pitch bearing assembly 200 of a rotor blade retention assembly 109. It should be appreciated that the process steps shown and described in connection with any depicted flow diagram are exemplary in nature. The order of steps may be varied from what is shown, and/or particular steps may be omitted, and/or additional steps may be added. As compared to what is depicted, various embodiments may include additional steps (e.g., prior to an initial depicted step, in between steps, or following a final depicted step).

In at least one embodiment, the installation process 900 begins at operation 902 by moving the blade seal 124 over the hub arm 108, in the inboard direction from the outboard end, until it contacts the inboard edge 202 of the hub arm 108. In particular, the blade seal 124 may be slid over the hub arm 108. In some embodiments, the blade seal 124 may be moved to within a predetermined distance from a contact point of the inboard edge 202, and then an inspection may be performed.

At operation 904, the first pitch bearing 127 is moved over the hub arm 108, in the inboard direction from the outboard end, until it contacts the blade seal 124. For example, as with the blade seal 124, the first pitch bearing 127 may be slid over the hub arm 108.

At operation 906, the spacer 204 is moved over the hub arm 108, in the inboard direction from the outboard end, until it contacts the first pitch bearing 127. For example, the spacer 204 may be slid over the hub arm 108 until it contacts the first pitch bearing 127 at a contact surface thereof. Spacer 204 may be rotated about the longitudinal axis of the hub arm 108 such that the clearance holes 205a, 205b of the spacer 204 align with the hub arm lug 131.

Next, at operation 908, the second pitch bearing 129 is moved over the hub arm 108, in the inboard direction from the outboard end, until it contacts the spacer 204. For example, like the first pitch bearing 127 may be slid over the hub arm 108 until it contacts the spacer 204 at a contact surface thereof.

At operation 910, the fastener 206 is coupled to the outboard end of the hub arm 108. The fastener 206 may be removably engaged with the outboard end of the hub arm 108. For example, if the fastener 206 is a spanner nut, the fastener 206 may be threaded onto a threaded portion 208 of the hub arm.

At operation 912, the retaining ring 213 is inserted into the groove 210. The assembly may then be inspected and/or tested to verify a desired configuration prior to use.

### IV. Example Method of Installing the Tension-Torsion Assembly

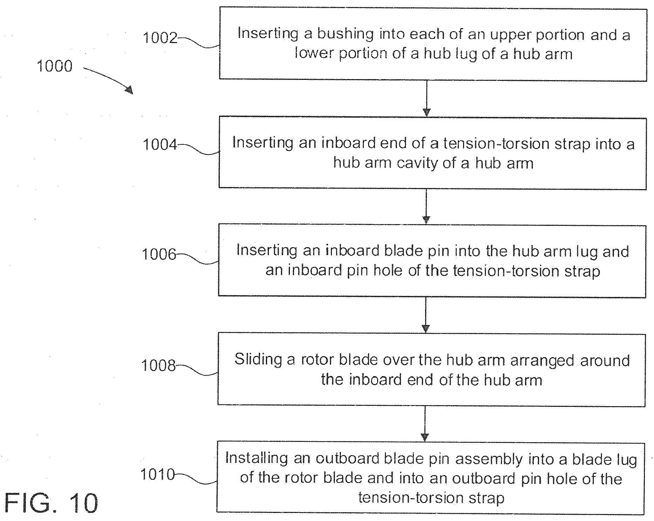

Figure 10 illustrates an installation process 1000 (e.g., method, etc.) for installing a tension-torsion assembly 141 of a rotor blade retention assembly 109. The tension-torsion assembly 141 may be installed after the pitch bearing assembly 200 is installed.

The installation process 1000 begins at operation 1002 by inserting the bushings 133a and 133b into the upper portion 131a and lower portion 131b of hub arm lug 131, respectively. The bushings may be first inserted into the hub arm cavity 113 and then inserted into the hub arm lug 131 from inside the hub cavity. The bushings 133 may be press fit into the hub arm lug 131 such that they do not fall out under the force of gravity. In some embodiments, the bushings are not installed and operation 1002 is not performed.

At operation 1004, the inboard end 136 of the tension-torsion strap is inserted into the hub arm cavity 113. The inboard pin hole 135 may be aligned with the hub arm lug 131.

At operation 1006, the inboard blade pin 132 is inserted into the hub arm lug 131 and the inboard pin hole 135. The inboard blade pin 132 may be tapered or chamfered to facilitate the alignment of the hub arm lug 131 and the inboard pin hole 135. Once the inboard blade pin is in place, the pin retaining rings 143 can be inserted in their respective grooves 139 in the inboard blade pin 132. Alternatively, one of the pin retaining rings 143 (e.g., first pin retaining ring 143a) may be inserted before the inboard blade pin 132 and the other pin retaining ring 143 (e.g., second pin retaining ring 143b) may be inserted after the inboard blade pin 132 is in place. After operation 1006, the tension-torsion strap is coupled to the hub arm 188 by the inboard blade pin 132. The tension torsion strap may extend through the hub arm cavity 113 such that the outboard end 138 of the tension-torsion strap 134 extends beyond the outboard end of the hub arm 108.

At operation 1008, the rotor blade 110 is slid over the hub arm, in the inboard direction from the outboard end. The rotor blade 110 may slide over the hub arm 108 until it contacts the blade seal 124. The rotor blade 110 may be rotated about the longitudinal axis of the hub arm 108 such that the tension torsion strap fits into the blade inner cavity 118 in the region where the height of the blade inner cavity 118 reduces to a height H2. For example, the width W1 of the tension-torsion strap 134 may be larger than the height H1 of the tension-torsion strap at the outboard end 138. Height H1 may be similar to or slightly smaller than height H2, while width W1 is larger than height H2. The rotor blade 110 may not be able to slide over the hub arm 108 until the tension-torsion strap 134 is aligned properly and the outboard end 138 fits into the region where the height of the blade inner cavity 118 reduces to a height H2. The outboard pin hole 137 may be roughly aligned with the blade lug 114 once the rotor blade 110 is slid over the hub arm 108.

At operation 1010, the outboard blade pin retainer assembly 140 may be installed into the blade lug 114 and the outboard pin hole 137 of the tension-torsion strap 134. The upper bushing 148 and the lower bushing 150 may be inserted into the upper portion 114a and the lower portion 114b of the blade lug 114, respectively. The outboard blade pin 158 may then be inserted into the upper bushing inner cavity 152, the outboard pin hole 137, and the lower bushing inner cavity 153 (shown in Figure 4). Fastener 176 may then be inserted into the bottom of the outboard blade pin 158 and the fastener nut 168 may be inserted into the top of the outboard blade pin 158. The fastener 176 may extend through the outboard blade pin 158 and be coupled to the fastener nut 168. For example, the fastener 176 may be threaded into a hole in the fastener nut 168. Additional details regarding the installation of the outboard blade pin retainer assembly 140 are described below.

### V. Example Method of Installing the Retainer Assembly

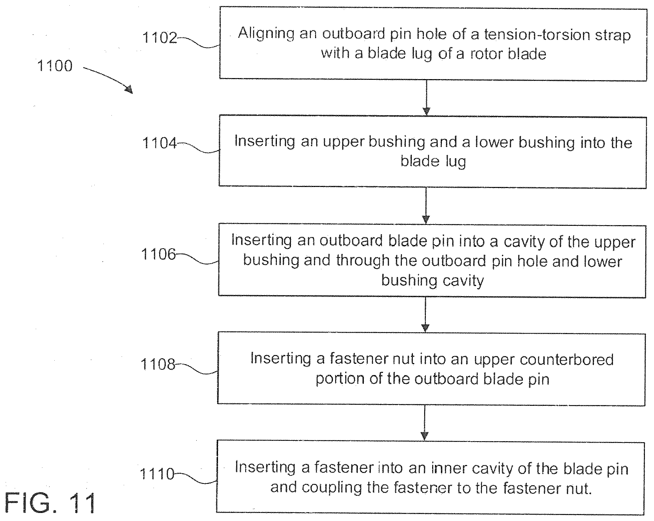

Figure 11 illustrates an installation process 1100 (e.g., method, etc.) for installing the outboard blade pin retainer assembly 140 of a rotor blade retention assembly 109.

The installation process 1100 begins at operation 1102 by aligning the outboard pin hole 137 of the tension-torsion strap 134 with the blade lug 114. At operation 1104, the upper bushing 148 and the lower bushing 150 are inserted into the blade lug 114. As a result, the outboard pin hole 137 is disposed between and supported by the upper bushing 148 and the lower bushing 150.

At operation 1106, the outboard blade pin 158 is inserted into the upper bushing inner cavity 152 and through the outboard pin hole 137 and the lower bushing inner cavity. As a result, the outboard pin hole 137 surrounds the blade pin body portion 160 of the outboard blade pin 158 and the base portion 166 is disposed within the lower counterbored portion 156.

At operation 1108, the fastener nut 168 is inserted into the upper counterbored portion 154. As a result, the lower portion 172 of the fastener nut 168 is disposed within the blade pin inner cavity 162, and the top portion 164 of the outboard blade pin 158 is disposed between the lower portion 172 and the upper bushing 148. Further, the cap portion 170 is disposed above the upper bushing 148.

At operation 1110 the fastener 176 is inserted into the blade pin inner cavity 162 and coupled to the fastener nut 168 to compress the upper bushing 148 and to reduce a gap between the upper bushing 148 and the outboard pin hole 137.

### VI. Configuration of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. All changes and modifications that come within the scope of the appended claims are desired to be protected. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

## Claims

1. A system comprising
a plurality of hub arms (108) coupled to and extending radially outward from a central hub (106) and a hub bowl (107), at least one hub arm (108) of the plurality of hub arms comprising a hub arm lug (131);
a plurality of rotor blades (110);
a rotor blade retention assembly (109) configured to connect one of the rotor blades (110) to the central hub (106), the assembly (109) comprising:
a tension-torsion assembly (141) configured to couple the one of the rotor blades (110) to the at least one hub arm (108), the tension-torsion assembly (141) comprising
a tension-torsion strap (134) comprising an inboard end (136) and an outboard end (138), the inboard end (136) comprising an inboard pin hole (135) and the outboard end (138) comprising an outboard pin hole (137);
an inboard blade pin (132) configured to extend through the hub arm lug (131) and the inboard pin hole (135) and to couple the inboard end (136) of the tension-torsion strap (134) to the hub arm (108); and
an outboard blade pin (158) configured to extend through a blade lug (114) of the one of the rotor blades (110) and the outboard pin hole (137) and to couple the outboard end (138) of the tension-torsion strap (134) to the rotor blade (110);
wherein the hub arm lug (131) comprises an upper portion (131a) and a lower portion (131b), wherein a first bushing (133a) is disposed in the upper portion (131a) of the hub arm lug (131) and a second bushing (133b) is disposed in the lower portion (131b) of the hub arm lug (131); and
the inboard end (136) of the tension-torsion strap (134) is disposed between the upper portion (131a) and the lower portion (131b) of the hub arm lug (131),
the system further comprising a pitch bearing assembly (200) arranged around the at least one hub arm (108) and disposed within a blade inner cavity (118) of the rotor blade (110), the pitch bearing assembly (200) comprising:
a first pitch bearing (127); and
a second pitch bearing (129).

2. The system of claim 1, wherein:
the tension-torsion strap (134) is configured to be disposed within a blade inner cavity (118) of the rotor blade (110), the blade inner cavity (118) extending along an interior of the rotor blade (110) or is configured to be coupled to the hub arm (108) without extending into the hub bowl (107).

3. The system of claim 2, wherein:
the inboard end (136) of the tension-torsion strap (134) is configured to be disposed within a hub arm cavity (113) of the hub arm (108), the hub arm cavity (113) extending along an interior of the hub arm (108).

4. The system of one of claims 1-3, wherein the inboard blade pin (132) and the outboard blade pin (158) are configured to be removed without removing a hub top plate (103) coupled to the hub bowl (107).

5. The system of one of claims 1-4, wherein a first end of the inboard blade pin (132) comprises a first groove (139a) around its circumference configured to receive a first pin retaining ring (143a), and an opposite end of the inboard blade pin (132) comprises a second groove (139b) around its circumference configured to receive a second pin retaining ring (143b).

6. The system of one of claims 1 to 5, comprising a first fastener and a second fastener that are configured to couple the tension-torsion strap (134) to the hub arm (108) and the rotor blade (110), respectively, in a shear state, optionally wherein the second fastener comprises a cavity extending longitudinally therethrough.

7. The system of one of claims 1 to 6, wherein the pitch bearing assembly (200) further comprises a spacer (204) configured to maintain a separation between the first pitch bearing (127) and the second pitch bearing (129).

8. The system of claim 7, wherein the pitch bearing assembly (200) further comprises a blade seal (124) positioned between the rotor blade (110) and the central hub, the blade seal (124) configured to seal the blade inner cavity (118) from an external environment.

9. The system of claim 8, wherein the pitch bearing assembly (200) further comprises a third fastener (206) coupled to an outboard end (130) of the hub arm (108), optionally wherein the third fastener (206) is a spanner nut and is coupled to a threaded portion (208) of the hub arm (108).

10. The system of claim 9, wherein the pitch bearing assembly (200) further comprises a retaining ring (213) disposed within a groove (210) around a circumference of the hub arm (108), optionally wherein the hub arm lug (131) is disposed between the first and second pitch bearings (127, 129).

11. A method (1000) for installing a tension-torsion assembly (141) of a rotor blade retention assembly (109) of a system according to one of the preceding claims, the method comprising:
inserting (1002) the bushings (133a, 133b) into each of the upper portion (131a) and lower portion (131b) of the hub arm lug (131);
inserting (1004) the inboard end (136) of the tension-torsion strap (134) into a hub arm cavity (113) of the at least one hub arm (108);
inserting (1006) the inboard blade pin (132) into the hub arm lug (131) and the inboard pin hole (135) of the tension-torsion strap (134);
sliding (1008) the one of the rotor blades (110) over the at least one hub arm (108) arranged around the inboard end of the hub arm (108); and
installing (1010) an outboard blade pin assembly (140) into the blade lug (114) of the one of the rotor blades (110) and into the outboard pin hole (137) of the tension-torsion strap (134).

12. The method of claim 11, further comprising installing a first retaining ring (143a) on a first end of the inboard blade pin (132) and installing a second retaining ring (143b) on a second end of the inboard blade pin (132).

## Patentansprüche

1. System, umfassend:
eine Vielzahl von Nabenarmen (108), die an eine zentrale Nabe (106) und eine Nabenschale (107) gekoppelt ist und sich von diesen radial nach außen erstreckt, wobei mindestens ein Nabenarm (108) der Vielzahl von Nabenarmen einen Nabenarmansatz (131) umfasst;
eine Vielzahl von Rotorblättern (110);
eine Rotorblatthaltebaugruppe (109), die dazu konfiguriert ist,
eines der Rotorblätter (110) mit der zentralen Nabe (106) zu verbinden, wobei die Baugruppe (109) Folgendes umfasst:
eine Zug-Torsions-Baugruppe (141), die dazu konfiguriert ist,
eines der Rotorblätter (110) an den mindestens einen Nabenarm (108) zu koppeln, wobei die Zug-Torsions-Baugruppe (141) Folgendes umfasst:
ein Zug-Torsions-Band (134), das ein inneres Ende (136) und ein äußeres Ende (138) umfasst, wobei das innere Ende (136) ein inneres Stiftloch (135) umfasst und das äußere Ende (138) ein äußeres Stiftloch (137) umfasst;
einen inneren Blattstift (132), der dazu konfiguriert ist, sich durch den Nabenarmansatz (131) und das innere Stiftloch (135) zu erstrecken und das innere Ende (136) des Zug-Torsions-Bandes (134) an den Nabenarm (108) zu koppeln; und
einen äußeren Blattstift (158), der dazu konfiguriert ist, sich durch einen Blattansatz (114) des einen der Rotorblätter (110) und das äußere Stiftloch (137) zu erstrecken und das äußere Ende (138) des Zug-Torsions-Bandes (134) an das Rotorblatt (110) zu koppeln;
wobei der Nabenarmansatz (131) einen oberen Abschnitt (131a) und einen unteren Abschnitt (131b) umfasst, wobei eine erste Buchse (133a) in dem oberen Abschnitt (131a) des Nabenarmansatzes (131) angeordnet ist und eine zweite Buchse (133b) in dem unteren Abschnitt (131b) des Nabenarmansatzes (131) angeordnet ist; und
wobei das innere Ende (136) des Zug-Torsions-Bandes (134) zwischen dem oberen Abschnitt (131a) und dem unteren Abschnitt (131b) des Nabenarmansatzes (131) angeordnet ist,
wobei das System ferner eine Pitchlagerbaugruppe (200) umfasst, die um den mindestens einen Nabenarm (108) vorgesehen und innerhalb eines inneren Blatthohlraums (118) des Rotorblatts (110) angeordnet ist, wobei die Pitchlagerbaugruppe (200) Folgendes umfasst:
ein erstes Pitchlager (127); und
ein zweites Pitchlager (129).

2. System nach Anspruch 1, wobei:
das Zug-Torsions-Band (134) dazu konfiguriert ist, innerhalb eines inneren Blatthohlraums (118) des Rotorblatts (110) angeordnet zu sein, wobei sich der innere Blatthohlraum (118) entlang einer Innenseite des Rotorblatts (110) erstreckt, oder dazu konfiguriert ist, an den Nabenarm (108) gekoppelt zu werden, ohne sich in die Nabenschale (107) zu erstrecken.

3. System nach Anspruch 2, wobei:
das innere Ende (136) des Zug-Torsions-Bandes (134) dazu konfiguriert ist, innerhalb eines Nabenarmhohlraums (113) des Nabenarms (108) angeordnet zu sein, wobei sich der Nabenarmhohlraum (113) entlang einer Innenseite des Nabenarms (108) erstreckt.

4. System nach einem der Ansprüche 1-3, wobei der innere Blattstift (132) und der äußere Blattstift (158) dazu konfiguriert sind, entfernt zu werden, ohne dass eine an die Nabenschale (107) gekoppelte obere Nabenplatte (103) entfernt wird.

5. System nach einem der Ansprüche 1-4, wobei ein erstes Ende des inneren Blattstifts (132) eine erste Nut (139a) an seinem Umfang umfasst, die dazu konfiguriert ist, einen ersten Stifthaltering (143a) aufzunehmen, und ein gegenüberliegendes Ende des inneren Blattstifts (132) eine zweite Nut (139b) an seinem Umfang umfasst, die dazu konfiguriert ist, einen zweiten Stifthaltering (143b) aufzunehmen.

6. System nach einem der Ansprüche 1 bis 5, umfassend ein erstes Befestigungsmittel und ein zweites Befestigungsmittel, die dazu konfiguriert sind, das Zug-Torsions-Band (134) in einem Scherzustand an den Nabenarm (108) bzw. das Rotorblatt (110) zu koppeln, wobei das zweite Befestigungsmittel gegebenenfalls einen sich in Längsrichtung dadurch erstreckenden Hohlraum aufweist.

7. System nach einem der Ansprüche 1 bis 6, wobei die Pitchlagerbaugruppe (200) ferner einen Abstandshalter (204) umfasst, der dazu konfiguriert ist, einen Abstand zwischen dem ersten Pitchlager (127) und dem zweiten Pitchlager (129) aufrechtzuerhalten.

8. System nach Anspruch 7, wobei die Pitchlagerbaugruppe (200) ferner eine zwischen dem Rotorblatt (110) und der zentralen Nabe positionierte Blattdichtung (124) umfasst, wobei die Blattdichtung (124) dazu konfiguriert ist, den inneren Blatthohlraum (118) gegenüber der äußeren Umgebung abzudichten.

9. System nach Anspruch 8, wobei die Pitchlagerbaugruppe (200) ferner ein drittes Befestigungsmittel (206) umfasst, das an ein äußeres Ende (130) des Nabenarms (108) gekoppelt ist, wobei es sich bei dem dritten Befestigungsmittel (206) gegebenenfalls um eine Spannmutter handelt, die an einen Gewindeabschnitt (208) des Nabenarms (108) gekoppelt ist.

10. System nach Anspruch 9, wobei die Pitchlagerbaugruppe (200) ferner einen Haltering (213) umfasst, der innerhalb einer Nut (210) um einen Umfang des Nabenarms (108) angeordnet ist, wobei gegebenenfalls der Nabenarmansatz (131) zwischen dem ersten und zweiten Pitchlager (127, 129) angeordnet ist.

11. Verfahren (1000) zum Einbauen einer Zug-Torsions-Baugruppe (141) einer Rotorblatthaltebaugruppe (109) eines Systems nach einem der vorhergehenden Ansprüche, wobei das Verfahren Folgendes umfasst:
Einführen (1002) der Buchsen (133a, 133b) in jeden von dem oberen Abschnitt (131a) und dem unteren Abschnitt (131b) des Nabenarmansatzes (131);
Einführen (1004) des inneren Endes (136) des Zug-Torsions-Bandes (134) in einen Nabenarmhohlraum (113) des mindestens einen Nabenarms (108);
Einführen (1006) des inneren Blattstifts (132) in den Nabenarmansatz (131) und das innere Stiftloch (135) des Zug-Torsions-Bandes (134);
Schieben (1008) des einen der Rotorblätter (110) über den mindestens einen Nabenarm (108), der um das innere Ende des Nabenarms (108) vorgesehen ist; und
Einbauen (1010) einer äußeren Blattstiftbaugruppe (140) in den Blattansatz (114) eines der Rotorblätter (110) und in das äußere Stiftloch (137) des Zug-Torsions-Bandes (134).

12. Verfahren nach Anspruch 11, ferner umfassend Einbauen eines ersten Halterings (143a) an einem ersten Ende des inneren Blattstifts (132) und Einbauen eines zweiten Halterings (143b) an einem zweiten Ende des inneren Blattstifts (132).

## Revendications

1. Système comprenant
une pluralité de bras de moyeu (108) couplés à un moyeu central (106) et s'étendant radialement vers l'extérieur à partir de celui-ci et une ogive de moyeu (107), au moins un bras de moyeu (108) de la pluralité de bras de moyeu comprenant une oreille de bras de moyeu (131) ;
une pluralité de pales de rotor (110) ;
un ensemble de retenue de pale de rotor (109) configuré pour relier l'une des pales de rotor (110) au moyeu central (106), l'ensemble (109) comprenant :
un ensemble tension-torsion (141) configuré pour coupler l'une des pales de rotor (110) à l'au moins un bras de moyeu (108), l'ensemble tension-torsion (141) comprenant
une sangle de tension-torsion (134) comprenant une extrémité intérieure (136) et une extrémité extérieure (138), l'extrémité intérieure (136) comprenant un trou de goupille intérieur (135) et l'extrémité extérieure (138) comprenant un trou de goupille extérieur (137) ;
une goupille de pale intérieure (132) configurée pour traverser l'oreille de bras de moyeu (131) et le trou de goupille intérieur (135) et pour coupler l'extrémité intérieure (136) de la sangle de tension-torsion (134) au bras de moyeu (108) ; et
une goupille de pale extérieure (158) configurée pour s'étendre à travers une oreille de pale (114) de l'une des pales de rotor (110) et le trou de goupille extérieur (137) et pour coupler l'extrémité extérieure (138) de la sangle de tension-torsion (134) à la pale de rotor (110) ;
dans lequel l'oreille de bras de moyeu (131) comprend une partie supérieure (131a) et une partie inférieure (131b), dans lequel une première bague (133a) est disposée dans la partie supérieure (131a) de l'oreille de bras de moyeu (131) et une seconde bague (133b) est disposée dans la partie inférieure (131b) de l'oreille de bras de moyeu (131) ; et
l'extrémité intérieure (136) de la sangle de tension-torsion (134) est disposée entre la partie supérieure (131a) et la partie inférieure (131b) de l'oreille de bras de moyeu (131), le système comprenant en outre un ensemble roulement de pas (200) disposé autour de l'au moins un bras de moyeu (108) et disposé au sein d'une cavité interne de pale (118) de la pale de rotor (110), l'ensemble palier de pas (200) comprenant :
un premier roulement de pas (127) ; et
un second roulement de pas (129).

2. Système selon la revendication 1, dans lequel :
la sangle de tension-torsion (134) est configurée pour être disposée au sein d'une cavité interne de pale (118) de la pale de rotor (110), la cavité interne de pale (118) s'étendant le long d'un intérieur de la pale de rotor (110) ou est configurée pour être couplée au bras de moyeu (108) sans s'étendre dans l'ogive de moyeu (107).

3. Système selon la revendication 2, dans lequel :
l'extrémité intérieure (136) de la sangle de tension-torsion (134) est configurée pour être disposée au sein d'une cavité de bras de moyeu (113) du bras de moyeu (108), la cavité de bras de moyeu (113) s'étendant le long d'un intérieur du bras de moyeu (108).

4. Système selon l'une des revendications 1 à 3, dans lequel la goupille de pale intérieure (132) et la goupille de pale extérieure (158) sont configurées pour être retirées sans retirer une plaque supérieure de moyeu (103) couplée à l'ogive de moyeu (107).

5. Système selon l'une des revendications 1 à 4, dans lequel une première extrémité de la goupille de pale intérieure (132) comprend une première rainure (139a) autour de sa circonférence configurée pour recevoir un premier anneau de retenue de goupille (143a), et une extrémité opposée de la goupille de pale intérieure (132) comprend une seconde rainure (139b) autour de sa circonférence configurée pour recevoir un second anneau de retenue de goupille (143b).

6. Système selon l'une des revendications 1 à 5, comprenant une première fixation et une deuxième fixation configurées pour coupler la sangle de tension-torsion (134) au bras de moyeu (108) et à la pale de rotor (110), respectivement, dans un état de cisaillement, éventuellement dans lequel la deuxième fixation comprend une cavité s'étendant longitudinalement à travers elle.

7. Système selon l'une des revendications 1 à 6, dans lequel l'ensemble roulement de pas (200) comprend en outre une entretoise (204) configurée pour maintenir une séparation entre le premier roulement de pas (127) et le second roulement de pas (129).

8. Système selon la revendication 7, dans lequel l'ensemble roulement de pas (200) comprend en outre un joint d'étanchéité de pale (124) positionné entre la pale de rotor (110) et le moyeu central, le joint d'étanchéité de pale (124) étant configuré pour assurer l'étanchéité entre la cavité interne de pale (118) et un environnement externe.

9. Système selon la revendication 8, dans lequel l'ensemble roulement de pas (200) comprend en outre une troisième fixation (206) couplée à une extrémité extérieure (130) du bras de moyeu (108), éventuellement dans lequel la troisième fixation (206) est un écrou à clé et est couplée à une partie filetée (208) du bras de moyeu (108).

10. Système selon la revendication 9, dans lequel l'ensemble roulement de pas (200) comprend en outre un anneau de retenue (213) disposé au sein d'une rainure (210) autour d'une circonférence du bras de moyeu (108), éventuellement dans lequel l'oreille de bras de moyeu (131) est disposée entre les premier et second roulements de pas (127, 129).

11. Procédé (1000) d'installation d'un ensemble tension-torsion (141) d'un ensemble de retenue de pale de rotor (109) d'un système selon l'une des revendications précédentes, le procédé comprenant :
l'insertion (1002) des bagues (133a, 133b) dans chacune de la partie supérieure (131a) et de la partie inférieure (131b) de l'oreille de bras de moyeu (131) ;
l'insertion (1004) de l'extrémité intérieure (136) de la sangle de tension-torsion (134) dans une cavité de bras de moyeu (113) de l'au moins un bras de moyeu (108) ;
l'insertion (1006) de la goupille de pale intérieure (132) dans l'oreille de bras de moyeu (131) et le trou de goupille intérieur (135) de la sangle de tension-torsion (134) ;
la coulissement (1008) de l'une des pales de rotor (110) sur l'au moins un bras de moyeu (108) agencé autour de l'extrémité intérieure du bras de moyeu (108) ; et
l'installation (1010) d'un ensemble goupille de pale extérieure (140) dans l'oreille de pale (114) de l'une des pales de rotor (110) et dans le trou de goupille extérieur (137) de la sangle de tension-torsion (134).

12. Procédé selon la revendication 11, comprenant en outre l'installation d'un premier anneau de retenue (143a) sur une première extrémité de la goupille de pale intérieure (132) et l'installation d'un second anneau de retenue (143b) sur une seconde extrémité de la goupille de pale intérieure (132).
